# EUROPEAN PATENT APPLICATION

(11) **EP 1 455 346 A2**
(43) Date of publication of application: **08.09.2004**
(21) Application number: 04004264.0
(22) Date of filing: 25.02.2004
(51) Int. Cl.: G11B 7/00

(54) **Information recording apparatus, information recording method, and information recording medium on which information recording processing program is recorded**

(30) Priority: 07.03.2003 JP 2003061273
(71) Applicant: Pioneer Corporation, Tokyo-to (JP)
(72) Inventor: Yoshida, Takao, Yamada Kawagoe-shi Saitama-ken (JP); Kimikawa, Yuichi, Yamada Kawagoe-shi Saitama-ken (JP); Norikane, Eiji, Yamada Kawagoe-shi Saitama-ken (JP)
(74) Representative: Grünecker, Kinkeldey, Stockmair & Schwanhäusser Anwaltssozietät

(57) **Abstract**

An disk reproducing apparatus (S) for recording information detects an error occurrence inside the disk reproducing apparatus (S) by a system control portion (7). The disk reproducing apparatus (S) obtains at least one of temperature information, voltage information and operational information inside the disk reproducing apparatus (S) on detecting the error occurrence, and records the obtained information onto a memory (8).

## Description

### BACKGROUND OF THE INVENTION

### 1. Field of the Invention

The present invention relates to a technological field of an information recording apparatus for recording information and so on.

### 2. Related Art

AV (Audio visual) apparatuses including disk reproducing apparatuses for reproducing information from information recording media such as a CD (Compact Disc), a DVD (Digital Versatile Disc) and an MD (Mini Disc) or disk recording and reproducing apparatuses for recording and reproducing the information on the information recording media are used under various circumstances. Therefore, it is necessary to conduct a pre-product test, a problem analysis and so on by assuming various situations such as temperature changes. In particular, an actual use environment such as a use environment temperature plays an important role in the problem analysis. It is because performance of components and influence on mechanisms change according to the use environment temperature. For instance, an optical pickup provided to the AV apparatus is influenced by a high temperature as to its operation. Therefore, if the temperature gets out of a setting range, a control portion of the apparatus exerts control to stop the operation of the optical pickup.

The related art described above is disclosed in, for example, US Patent Publication No. US20010038587 A1.

Patent Document 1 discloses an information recording and reproducing apparatus for detecting the temperature of an information writing and reading device and stopping a writing operation of an information signal in the case where the temperature is out of the setting temperature range.

As for the apparatus in the past, however, only the operation of the optical pickup is stopped in the case where the temperature gets out of the setting range. Therefore, in the case where an error occurs to the apparatus, a manufacturer cannot help relying on information from a user (such as a temperature environment in which it was used). Such information just comes from the user's sense, and,besides, there is a difference in temperature between the inside and the outside of the apparatus, and so there is inconvenience of being unable to obtain correct information.

### SUMMARY OF THE INVENTION

Thus, the present invention has been implemented to resolve the above inconvenience as one of its issues, and an obj ect thereof is to provide an information recording apparatus , an information recording method and so on capable of obtaining more correct information on the inside of the apparatus on an error occurrence.

The above obj ect of the present invention can be achieved by an information recording apparatus for recording information, provided with: an error detection device which detects an error occurrence inside the information recording apparatus; an information obtaining device which obtains at least one of temperature information, voltage information and operational information inside the information recording apparatus on detecting the error occurrence; and a record control device which records the obtained information onto an information recording device.

The above obj ect of the present invention can be achieved by an information recording method for recording information, provided with: a process which detects an error occurrence inside an information recording apparatus; a process which obtains at least one of temperature information, voltage information, and operational information inside the information recording apparatus on detecting the error occurrence; and a process which records the obtained information on an information recording device.

The above obj ect of the present invention can be achieved by an information recording medium on which an information recording processing program is recorded so as to be readable through a computer which is included in an information recording apparatus for recording information, wherein the information recording processing program causes the computer to function as: an error detection device which detects an error occurrence inside the information recording apparatus; an information obtaining device which obtains at least one of temperature information, voltage information and operational information inside the information recording apparatus on detecting the error occurrence; and a record control device which records the obtained information onto an information recording device.

### BRIEF DESCRIPTION OF THE DRAWINGS

FIG. 1 is a diagram showing an overview configuration example of a disk reproducing apparatus;
FIG. 2 is a diagram showing an example of a thermistor circuit of a temperature detection circuit 6;
FIG. 3 is a flowchart showing an example of an error occurrence process in a system control portion 7;
FIGS. 4A, 4B and 4C are diagrams showing an example of error occurrence history accumulated in a memory 8;
FIG. 5 is a diagram showing an example of a bit conversion table 70 for converting a 10-bit value into a 7-bit value; and
FIG. 6 is a conceptual diagram showing an example of how accuracy of a value is changed according to a temperature range and is recorded in the memory 8.

### DESCRIPTION OF THE PREFERRED EMBODIMENTS

Hereinafter, preferred embodiments of the present invention will be described with reference to the attached drawings. The following embodiments are the embodiments in the case of applying the present invention to a disk reproducing apparatus for reproducing information recorded on an information recording medium such as a CD or a DVD (hereinafter, referred to as an "optical disk").

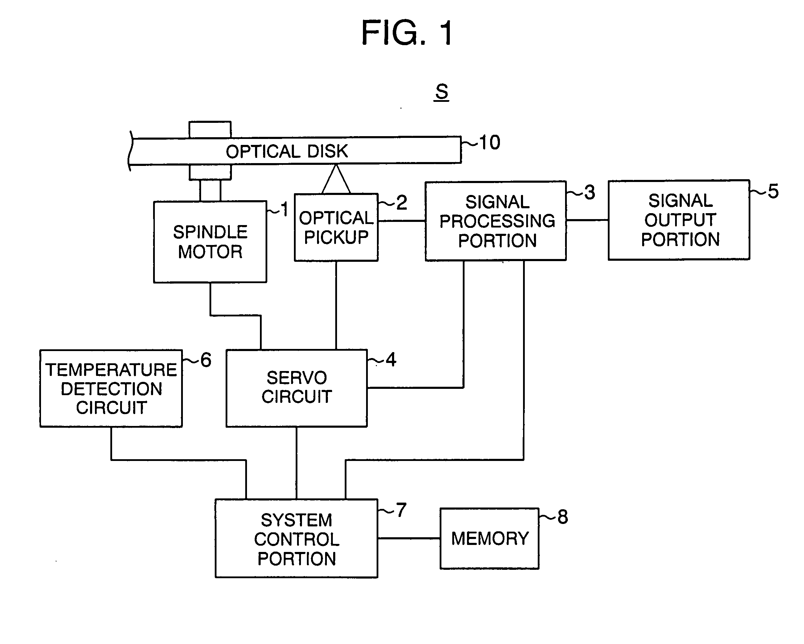

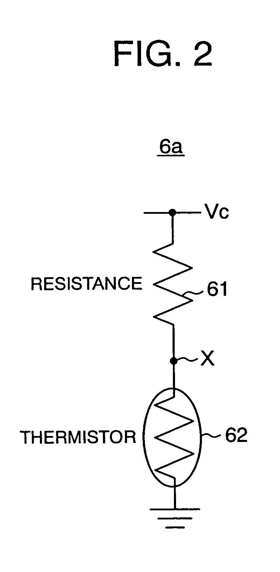

First, a configuration and functions of the disk reproducing apparatus according to the present invention will be described below with reference to FIGS. 1 and 2.

FIG. 1 is a diagram showing an overview configuration example of the disk reproducing apparatus. As shown in FIG. 1, a disk reproducing apparatus S is comprised of a spindle motor 1, an optical pickup 2, a signal processing portion 3, a servo circuit 4, a signal output portion 5, a temperature detection circuit 6, a system control portion 7 and a memory 8 as an information recording device. In addition, the disk reproducing apparatus S comprises an operation portion for receiving operation instructions (reproduction, stop and track number selection instructions and so on) from a user and outputting them to the system control portion 7, a display portion for displaying various information, and also a clock function and so on, which are omitted in the drawing.

The spindle motor 1 rotates an optical disk 10 placed at a predetermined clamp position on a turntable (not shown) at a fixed linear velocity.

The optical pickup 2 comprises a light source of a light beam, a light sensor, a condenser lens, an actuator and so on, and irradiates the light beam onto the optical disk 10 to have reflected light thereof detected by the light sensor and output a detection signal thereof to the signal processing portion 3.

The signal processing portion 3 comprises an RF (Radio Frequency) amplifier, a DSP (Digital Signal Processor) and so on, and converts the detection signal outputted from the optical pickup 2 into an RF signal with the RF amplifier so as to perform an EFM (Eight to Fourteen Modulation) demodulation process, an error correction process and so on to the RF signal with the DSP and output it as a digital signal to the signal output portion 5. The signal processing portion 3 also generates a tracking error signal and a focus error signal with the RF amplifier based on the detection signal outputted from the optical pickup 2, and outputs them to the servo circuit 4.

The servo circuit 4 servo-controls the spindle motor 1 and the optical pickup 2 based on the tracking error signal and focus error signal outputted from the signal processing portion 3, that is, it controls the optical pickup 2 and the velocity of the optical disk 10, a track position, a focus of the condenser lens and so on by forming a closed-circuit loop.

The signal output portion 5 comprises a D (Digital) /A (Analog) converter, an amplifier, a speaker and so on, and converts the digital signal outputted from the signal processing portion 3 into an analog signal with the D/A converter and amplifies it with the amplifier so as to output it as a sound wave from the speaker thereinafter.

The temperature detection circuit 6 comprises a thermistor circuit, an A/D converter and so on, and detects the temperature inside the disk reproducing apparatus S (hereinafter, referred to as the "inside of the apparatus") with the thermistor circuit.

FIG. 2 is a diagram showing an example of the thermistor circuit of the temperature detection circuit 6. As shown in FIG. 2, the thermistor circuit 6a is constituted by having a resistance 61 and a thermistor 62 serially-connected, and a voltage (fixed voltage) Vc is applied to one end of the resistance 61 with one end of the thermistor grounded. As a resistance value of the thermistor 62 changes in conjunction with temperature change of the inside of the apparatus, the voltage of a connection point X between the resistance 61 and the thermistor 62 also changes in conjunction therewith. The temperature detection circuit 6 obtains the voltage of the connection point X and has it converted into a digital value by the A/D converter, and then supplies this voltage value as temperature information to the system control portion 7. To be more specific, a temperature value can be known from this voltage value by using a voltage-temperature characteristic (curve) of the thermistor 62. A temperature detection element (a semiconductor for instance) other than the thermistor 62 may also be applied if it is an element of which resistance value changes according to the temperature change.

The system control portion 7 comprises a CPU (Central Processing Unit) having an operational function, an RAM (Random-Access Memory) for work, an ROM (Random-Only Memory) for storing a processing program (including an information recording program) , data, tables and the like, an oscillating circuit so on. And the CPU executes the processing program stored in the ROM so as to control the operation of the entire disk reproducing apparatus S.

To be more precise, the system control portion 7 communicates with the signal processing portion 3 and the servo circuit 4, and exerts control necessary to reproduce the information from the optical disk 10. The system control portion 7 also functions as an error detection device, an information obtaining device, and a record control device of the present invention (described later).

The memory 8 is a nonvolatile memory such as a HDD (Hard Disk Drive) and an EEPROM (Electrically Erasable Programmable Read Only Memory) for instance, which has the information obtained by the system control portion 7 recorded therein when an error occurrence inside the apparatus is detected by the system control portion 7.

In the configuration described above, the disk reproducing apparatus S reproduces the information from the optical disk 10 and outputs it from the speaker under the control of the system control portion 7.

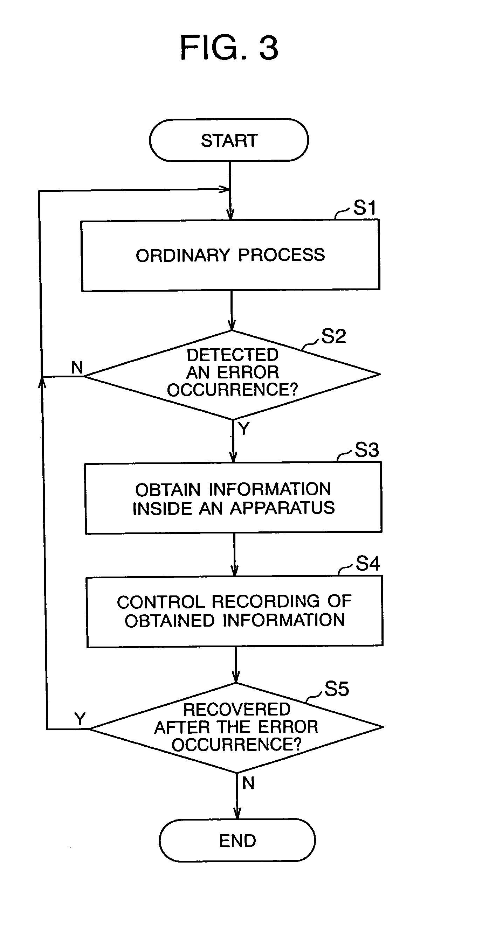

Next, an error occurrence process in such a disk reproducing apparatus S will be described below with reference to FIG. 3.

FIG. 3 is a flowchart showing an example of the error occurrence process in the system control portion 7.

In the process in FIG. 3, if there is no error occurrence, the system control portion 7 performs an ordinary process (the process related to the reproduction of the optical disk 10 for instance) (step S1).

In such an ordinary process, the system control portion 7 monitors the information such as temperature information, voltage information and operational information inside the apparatus.

Here, the temperature information is given from the temperature detection circuit 6 to the system control portion 7 as described above. The voltage information includes power supply voltages to the signal processing portion 3, the servo circuit 4, the temperature detection circuit 6 and the system control portion 7 itself, signal voltages in the signal processing portion 3 and the servo circuit 4, and also control voltages in the signal processing portion 3 and the servo circuit 4 and so on for instance. The voltage information is given from a power transmission route, the signal processing portion 3 and the servo circuit 4 to the system control portion 7.

The operational information includes a mechanical switch operating state (on/off) of in drive mechanisms of the spindle motor 1 and the optical pickup 2 and a placement and ejection mechanism of the optical disk 10, and also an electrical switch operating state in various circuits inside the apparatus. The information on such switch operating states is given directly or indirectly (from the servo circuit 4 for instance) to the system control portion 7 from the mechanical and the electrical switches. In addition, the operational information includes the information on signal processing operation in the signal processing portion 3 and the servo circuit 4.

Next, in the case of the error occurrence inside the apparatus, the system control portion 7 detects the error occurrence as the error detection device (step S2: Y), and moves on to a step S3. In the case where it detects no error occurrence (step S2: N), it repeats the ordinary process.

Here, the error contents related to the error occurrence include those related to the temperature, the voltage, and the operation. Causes of the error occurrences include those due to the environment such as the temperature outside the apparatus and usage by the user and those due to the effects caused by problems (including life and defects) of the components, circuits and so on inside the apparatus.

For instance, the error occurrence related to the temperature is detected in the case where the value related to the temperature information (voltage value here) is or exceeds an upper temperature limit (80°C for instance) or is a lower temperature limit (-20°C for instance). The error occurrence related to the voltage is detected in the case where the value of the power supply voltage or control voltage related to the voltage information is not within a predetermined range.

The error occurrence related to the operation of the optical pickup 2 is detected, for instance, in the case where the optical pickup 2 does not move to an inner circumference even though the system control portion 7 provides an operation instruction to the servo circuit 4 to move the optical pickup 2 to the inner circumference (for instance, off-operation is indicated by the operational information from the switch to be in on-operation at the move of the optical pickup 2 to the inner circumference).

The error occurrence related to the ejection of the optical disk 10 is detected, for instance, in the case where the optical disk 10 is not ej ected even though the system control portion 7 provides an instruction to the placement and ej ection mechanism of the optical disk 10 to eject the optical disk 10 (for instance, off-operation is indicated by the operational information from the switch to be in on-operation at the ejection of the optical disk 10).

In the case of the placement and ejection mechanism of the optical disk 10 comprising a disk changer, for instance, the error occurrence related to the operation of the disk changer is detected in the case where it cannot move to a target tray even though the system control portion 7 provides a tray selection instruction to the disk changer.

Furthermore, the error occurrence related to the signal processing operation is detected, for instance, in the case where the system control portion 7 receives the information on a focus error (unable to focus on the optical disk 10) or a tracking error (displacement to an information track) as the operational information from the servo circuit 4.

The errors described above are just examples, and various error occurrences other than these are detected.

Next, as the information obtaining device, the system control portion 7 obtains at least one of the temperature information, the voltage information, and the operational information inside the apparatus (step S3). For instance, as described above, the system control portion 7 obtains the temperature information from the temperature detection circuit 6. The system control portion 7 also obtains the voltage information from the power supply route, the signal processing portion 3 or the servo circuit 4. The system control portion 7 further obtains the operational information from the mechanical and the electrical switches and so on. The system control portion 7 can set which of the temperature information, the voltage information, and the operational information should be obtained according to the instruction via the operation portion from the user.

Next, as the record control device, the system control portion 7 associates the error contents (such as the error related to the temperature, for instance) related to the error occurrence with the obtained information (such as the value related to the temperature information, for instance) to record them in the memory 8 (step S4).

Next, the system control portion 7 determines whether or not the apparatus has recovered from the error after the error occurrence (step S5). If recovered from the error, (in the case of a transitory error occurrence, for instance), it returns to the step S1 and the system control portion 7 performs the same process as the above. If not recovered from the error, the system control portion 7 exerts control according to the error occurrence. For instance, in the case of the error related to the temperature or the error related to the operation of the optical pickup 2, the system control portion 7 provides the instruction to the servo circuit 4 to stop the operation of the optical pickup 2.

Thus, each time the error occurrence is detected in the step S2, the information obtained in the step S3 is recorded in the memory 8 and is accumulated as error occurrence history.

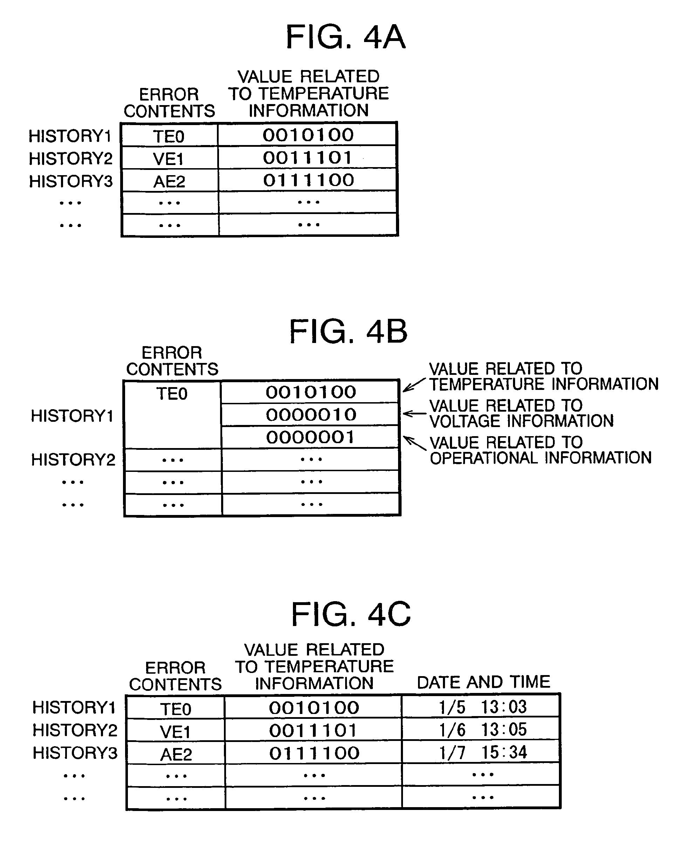

FIGS. 4A, 4B and 4C are diagrams showing an example of the error occurrence history accumulated in the memory 8. In the example shown in FIG. 4A, the error occurrence history of three times is accumulated. For instance, history 1 has the value related to the temperature information (0010100) associated with the error related to the temperature (TEO) and recorded therein, history 2 has the value related to the temperature information (0011101) associated with the error related to the line voltage (VE1) and recorded therein, and history 3 has the value related to the temperature information (0111100) associated with the error related to the operation of the optical pickup 2 (AE2) and recorded therein respectively. In the example shown in FIG. 4A, the value related to the temperature information is a 7-bit record value.

The example shown in FIG. 4A shows an instance in which the value related to the temperature information is recorded. There are also the cases, however, where the value related to the voltage information and the value related to the operational information (on and off of the switch, for instance) are recorded.

As shown in FIG. 4B, it is also possible to have a plurality of information recorded on one error occurrence. It is also possible, for instance, to provide the thermistor circuits of the temperature detection circuit 6 at a plurality of places inside the apparatus so that, on detecting the error occurrence, the temperature information on the plurality of places will be obtained and recorded in the memory 8.

Furthermore, it is also possible, on the error occurrence, to have the system control portion 7 obtain at least one of the date and the time from a clock function in the apparatus S and record it by associating it with the error contents and so on as shown in FIG. 4C.

As described above, according to this embodiment, the information such as the temperature information inside the apparatus on the error occurrence is recorded in the memory 8 , and so the manufacturer can obtain correct information which is helpful on the analysis thereafter (to read the information recorded in the memory 8 on a personal computer, for instance) .

In particular, such information is very important, for instance, in the problem analysis of which reproducibility is very low. The information such as the temperature information inside the apparatus on detecting the error occurrence is very important for the sake of discovering the problem apt to occur at a certain temperature because it allows the temperature at which the error occurred to be known. Therefore, the manufacturer can perform a prompt analysis and a prompt and precise problem investigation so as to deal with it promptly.

Furthermore, it is possible, by recording the error occurrence date and time in the memory 8 by associating it with the information such as the temperature information inside the apparatus on detecting the error occurrence, to have intervals between (frequency of) the error occurrences grasped by the manufacturer by the analysis afterward so as to investigate a cause of the transitory problem and so on.

In the above embodiment, it is also feasible, for instance, to provide a humidity detector in the apparatus S so that, on detecting the error occurrence, the system control portion 7 obtains humidity information in the apparatus and records it in the memory 8.

In the above embodiment, assuming that a temperature range determinable by using the thermistor circuit 6A in the temperature detection circuit 6 is -100 to 250°C for instance, and the A/D converter in the temperature detection circuit 6 converts an analog value into a 10-bit digital value (value related to the temperature information) , the temperature range of -100 to 250°C can be equally divided into 1024. Therefore, the system control portion 7 can recognize the temperature inside the apparatus (value related to the temperature information) with such high accuracy as an interval (temperature per bit) of approximately 0.34°C (350/1024 = 0.34°C).

However, in the case of recording the value related to the temperature information as a 7-bit value in the memory 8 because of the amount of memory and so on as with the above embodiment, the temperature range of -100 to 250°C is equally divided into 128. And there arises inconvenience that recording is onlypossiblewith such low accuracy as an interval of approximately 2.7°C (350/127 = 2.7°C). Thus, variations in the temperature values become significant due to variations in the components.

A description will be given hereinafter as to the control for, to resolve such inconvenience, changing the accuracy of the value according to the temperature range including the value related to the obtained temperature information and recording it in the memory 8.

In a step S4 in FIG. 3, the system control portion 7 changes the accuracy of the value related to the temperature information and records it in the memory 8.

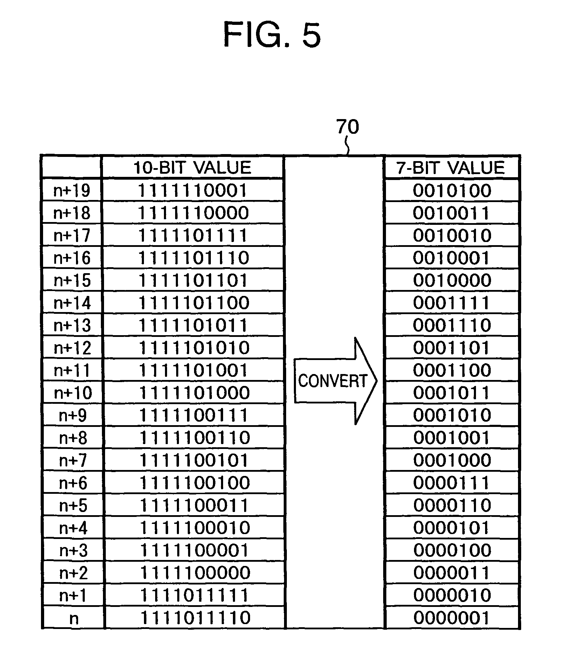

FIG. 5 is a diagram showing an example of a bit conversion table 70 for converting the 10-bit value into the 7-bit value. The bit conversion table 70 is stored in the ROM and so on in the system control portion 7, and is referred to by the system control portion 7 on recording the value related to the temperature information in the memory 8. Thus, the 10-bit value in a certain temperature range can be converted into the 7-bit value while maintaining the accuracy thereof.

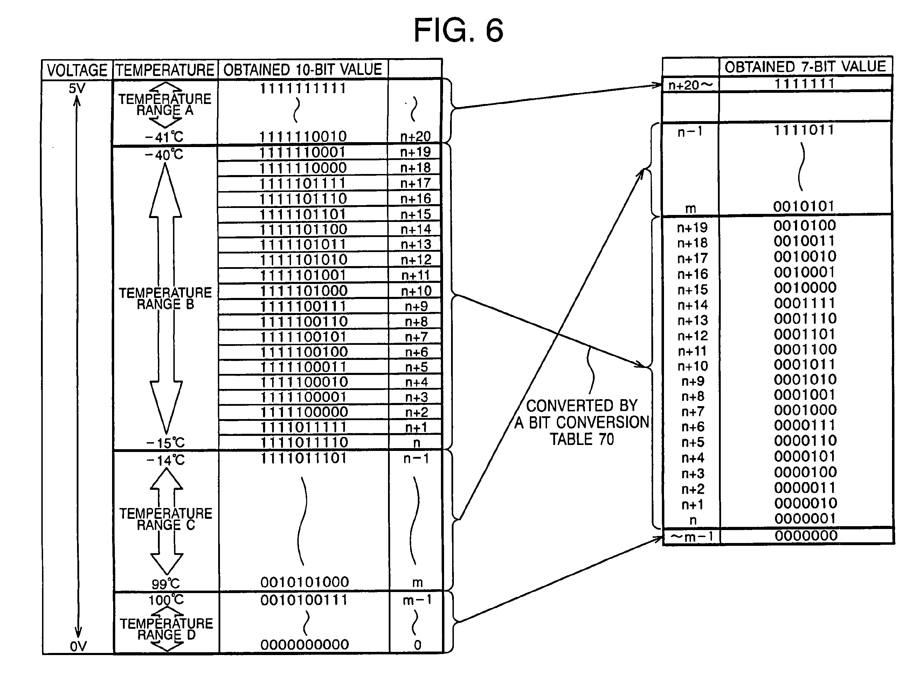

FIG. 6 is a conceptual diagram showing an example of how the accuracy of the value is changed according to the temperature range and is recorded in the memory 8. As shown in FIG. 6, as to a temperature range A of -41°C or lower and a temperature range D of 100°C or higher, the values related to the temperature information obtained by the system control portion 7 (obtained 10-bit values) are summed up as one value and is recorded in the memory 8 (7-bit record value) for the reason such as being outside performance guarantee of the apparatus S.

In a temperature range C of -14°C to 99°C, the obtained 10-bit values are recorded in the memory 8 (7-bit record values) by deleting three low order bits thereof for the reason such as little influence of the temperature for instance.

And in a temperature range B of -40°C to -15°C, the obtained 10-bit values are recorded in the memory 8 (7-bit record values) as the values converted based on the bit conversion table 70 shown in FIG. 5 for the reason such as being the temperature range desired to be known in detail. It is also possible to set more temperature ranges than the above four.

Thus, the system control portion 7 determines which of the plurality of temperature ranges set in stages as above includes the value related to the obtained temperature information, and changes the accuracy of the value according to the temperature range including the value so as to record it in the memory 8. For instance, when the value related to the obtained temperature information is within the temperature range B as a predetermined range (accuracy maintaining range) , the system control portion 7 records it in the memory 8 while maintaining the accuracy of the value. When the value related to the obtained temperature information is outside the temperature range B (temperature range A, C or D) , the system control portion 7 records the value in the memory 8 in a lower accuracy than when it is within the temperature range B. Such temperature ranges (A, B, C, and D) are set based on a relationship between the temperature and an error occurrence rate. For instance, the temperature range B is the temperature range of the highest error occurrence rate.

Thus, it is possible, by having the configuration to change the accuracy of the value according to the range including the value related to the obtained temperature information and record it, to set the accuracy higher in the range where detailed accuracy is required for the analysis, and otherwise to set the accuracy gradually lower so as to record the information more efficiently. It is also possible, by setting the accuracy of the record higher, to obtain detailed information including a variation level of the components.

As for the above embodiment, a description was given as to the instance of changing the accuracy of the value related to the temperature information and recording it. It is also possible, however, to change the accuracy of the value related to the voltage information, the operational information, or the humidity information instead of the temperature information and record it.

As for the above embodiment, a description was given as to the instance of applying the present invention to the disk reproducing apparatus for reproducing the information recorded on the information recording medium such as the optical disk. However, it is not limited thereto, and the present invention is applicable, for instance, to a disk recording apparatus for recording and reproducing the information on the information recording medium such as the optical disk and an AV apparatus (including an in-car apparatus) such as the one for recording and reproducing the information on an MD. Furthermore, the present invention is also applicable to other in-car navigation apparatuses and so on.

The above embodiment is constituted to obtain and record the information such as the temperature information inside the apparatus on detecting the error occurrence. It is also possible, however, to constitute it to obtain and record the information within a predetermined range (5 seconds for instance) centering on the time of detecting the error occurrence.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information recording apparatus (S) for recording information, comprising:
an error detection device (7) which detects an error occurrence inside the information recording apparatus;
an information obtaining device (7) which obtains at least one of temperature information, voltage information and operational information inside the information recording apparatus on detecting the error occurrence; and
a record control device (7) which records the obtained information onto an information recording device (8).

2. The information recording apparatus (S) according to claim 1, wherein, if a value relating to the obtained information is within a predetermined range, the record control device (7) records the value while maintaining accuracy thereof.

3. The information recording apparatus (S) according to claim 2, wherein, if the value relating to the obtained information is outside the predetermined range, the record control device (7) records the value in a lower accurate than when it is within the predetermined range.

4. The information recording apparatus (S) according to claim 2 or 3, wherein the predetermined range is a range of high error occurrence rates.

5. The information recording apparatus (S) according to claim 1, wherein the record control device (7) determines which of a plurality of ranges set in stages includes the value relating to the obtained information, and changes accuracy of the value according to the range including the value so as to record it.

6. The information recording apparatus (S) according to claim 5, wherein the plurality of ranges are set based on a relationship between a temperature and an error occurrence rate.

7. The information recording apparatus (S) according to any one of claims 1 to 6, wherein the information obtaining device (7) obtains the information at a plurality of places inside the apparatus.

8. The information recording apparatus (S) according to any one of claims 1 to 7, wherein the record control device (7) records the obtained information each time the error occurrence is detected.

9. The information recording apparatus (S) according to any one of claims 1 to 8, wherein the record control device (7) has a function of obtaining at least one of a date and a time, and associates at least one of the date and time of the error occurrence with the obtained information to record them.

10. The information recording apparatus (S) according to any one of claims 1 to 9, wherein the record control device (7) associates error contents relating to the error occurrence with the obtained information to record them.

11. The information recording apparatus (S) according to any one of claims 1 to 10, wherein the error contents relating to the error occurrence include at least one of those relating to a temperature, a voltage and an operation.

12. An information recording method for recording information, comprising:
a process which detects an error occurrence inside an information recording apparatus;
a process which obtains at least one of temperature information, voltage information, and operational information inside the information recording apparatus on detecting the error occurrence; and
a process which records the obtained information on an information recording device (8).

13. An information recording medium on which an information recording processing program is recorded so as to be readable through a computer which is included in an information recording apparatus (S) for recording information, wherein the information recording processing program causes said computer to function as:
an error detection device (7) which detects an error occurrence inside the information recording apparatus;
an information obtaining device (7) which obtains at least one of temperature information, voltage information and operational information inside the information recording apparatus on detecting the error occurrence; and
a record control device (7) which records the obtained information onto an information recording device (8).
